Europäisches Patentamt

European Patent Office

Office européen des brevets

(11) Publication number: **0 062 378**
**A1**

(19)

(12) **EUROPEAN PATENT APPLICATION**

(21) Application number: **82200385.1**

(22) Date of filing: **30.03.82**

(51) Int. Cl.³: **E 03 B 3/18, E 21 B 43/08**

(30) Priority: **31.03.81 NL 8101593**
**31.03.81 NL 8101595**

(43) Date of publication of application: **13.10.82**
**Bulletin 82/41**

(84) Designated Contracting States: **AT BE CH DE FR GB IT LI LU NL SE**

(71) Applicant: **WAVIN B.V., 251 Händellaan, NL-8031 EM Zwolle (NL)**

(72) Inventor: **Fehrmann, Heinrich, Oster Escher Fleer 17, D-4472 Haren 1 (DE)**

(74) Representative: **van der Veken, Johannes Adriaan et al, EXTERPATENT 3 & 4 Willem Witsenplein, NL-2596 BK The Hague (NL)**

(54) A plastics pipe comprising longitudinally extending channels in its wall and slits, a method of extruding such a plastics pipe and a plastics well pipe comprising a plurality of interconnected plastics pipes.

(57) A plastics pipe 1 comprises longitudinally extending channels 8 in its wall, said channels having slits 9 which extend longitudinally over the entire length of the pipe. The rounded edges 19, 20 of the slits 9 merge on the inner side, into straight channel surfaces 23, 24 forming an angle of approximately 90°. The straight channel surfaces 23, 24 join a substantially rounded channel cross section as tangential planes. A plastics pipe 1 can be manufactured by extrusion.

A plurality of interconnected plastics pipes 1 forms a well pipe; the pipes may be interconnected by screw thread, a glued joint 6a or by heat shrinkage.

-1-

A plastics pipe comprising longitudinally extending channels in its wall and slits, a method of extruding such a plastics pipe and a plastics well pipe comprising a plurality of interconnected plastics pipes.

The invention relates to a plastics pipe comprising longitudinally extending channels in its wall and slits which longitudinally extend in the outer wall of the channels.

A plastics pipe of this type comprising an inner wall and an outer wall and partitions provided thereinbetween, thus resulting in longitudinally extending channels in its wall, is known in the art. In order to admit ambient liquid after having installed such plastics pipes in the soil, for instance for water or oil-recovery purposes, longitudinally extending slits are provided in their outer wall which ensure communication between the inner side of the longitudinally extending channels and the outer side of the plastics pipe. However, said slits extend only over small portions of the plastics pipe so as to not impair the strength of the pipes.

Said plastics pipes present the disadvantage that, when forming the longitudinally extending slits, plasticsparticles get into the channels, which may cause clogging of the longitudinally extending channels, especially when during the formation of the slits there arise flashes on the inner walls of the channels. In order to overcome this drawback, after having formed the longitudinally extending slits, the plastics pipes must therefore be subjected to a complex mechanical post treatment, which leads to a considerable

-2-

increase in cost price, particularly in view of the fact that the channels have only a small cross-section, so that the inner side thereof can only difficultly be accessed.

A further disadvantage is that, when forming the slits, a flash formation on the inner walls of the channels will easily occur which flashes hamper the flow of liquid into the channels.

It is therefore an object of the present invention to provide a plastics pipe of the aforementioned type by means of which said disadvantages are prevented while a possible post treatment of the inner side of the longitudinally extending channels can be effected in a very simple manner.

Said object is attained according to the invention in that the longitudinal slits extend over the entire length of the channels.

This type of pipe offers the great advantage that such a pipe can be extruded while simultaneously providing the longitudinally extending slits, so that a plastics pipe having longitudinally extending channels in its wall need no longer be subsequently treated for the purpose of forming the longitudinally extending slits.

Very appropriately the edges of the slits are rounded, thus ensuring optimum flow conditions for water or other liquids flowing into the channels, there being, in addition, much less danger of sand accumulating and clogging in the slits, while moreover, any particles formed during a mechanical treatment can easily be removed or even do not occur at all when extruding.

With particular advantage, the edges of the slits are rounded on the inner side and the outer side, said slits merging on the inner side, into straight surfaces forming an angle of $5^{\circ}$ to $175^{\circ}$, preferably $45^{\circ}$ to $135^{\circ}$, and even more preferably approximately $90^{\circ}$.

-3-

The plastics pipe according to the invention can be manufactured advantageously by extrusion.

The present invention will be illustrated with respect to an embodiment in the drawing, wherein:

Figure 1 is a perspective view of a plastics pipe according to the invention;

Figure 2 is a sectional view of a plastics pipe according to the invention;

Figures 3 shows a detail of a wall of a plastics pipe according to the invention;

Figure 4 shows a plastics well pipe according to the invention, and

Figure 5 is a sectional view according to line V-V.

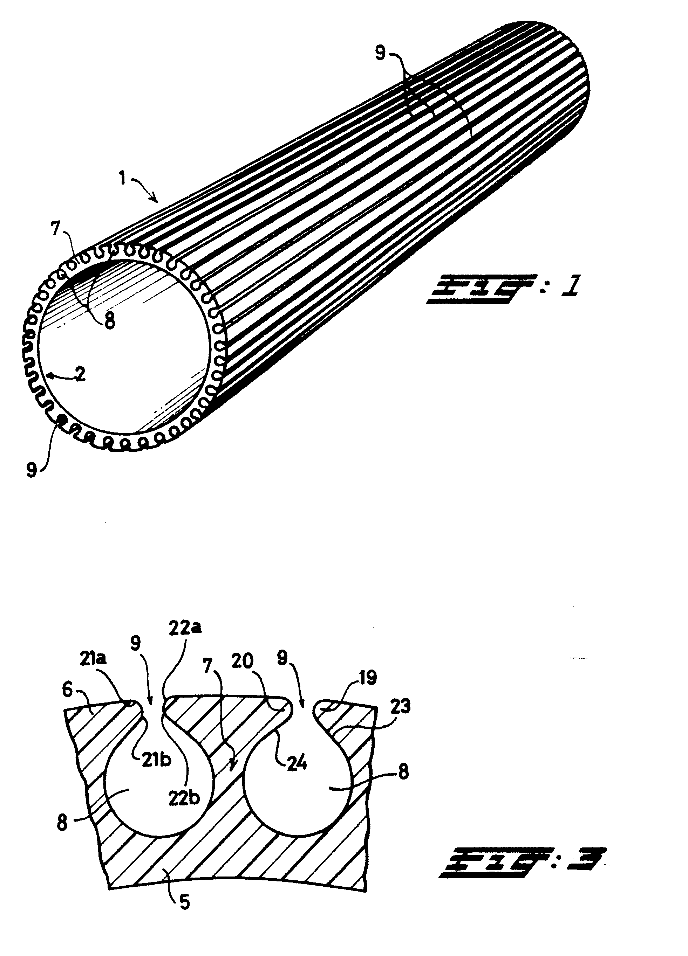

Fig. 1 shows a plastics pipe 1 comprising longitudinally extending channels 8 in the wall 2 as well as longitudinally extending slits 9 which ensure communication between the outer side of the plastics pipe 1 and the inner side of the channels 8.

The longitudinal slits 9 extend over the entire length of the plastics pipe.

The plastics pipe 1 advantageously consists of a thermoplastics material, such as polyvinylchloride, but it is also possible to manufacture plastics pipes of this type from polyolefins, such as polyethylene or polypropylene.

The longitudinally extending slits 9 may be formed by mechanical treatments, e.g. by sawing through the outer wall of the longitudinally extending channels 8.

However, said pipes can be manufactured in a simple manner and advantageously by means of extrusion, since the inside of the

-4-

extrusion nozzle may be directly provided with projections necessary for forming the longitudinally extending slits 9 needed to connect the inner side of the longitudinally extending channels 8 to the outer side of the plastics pipe 1.

It will be evident that the presence of slits 9 which longitudinally extend over the entire length of the plastics pipe according to the invention affords an easy removal of any plastics particles having possibly got into the channels 8 during the mechanical treatment of the pipe for forming the slits 9 from said channels, whereas post treatment of such a plastics pipe 1 will be superfluous when using an extrusion process.

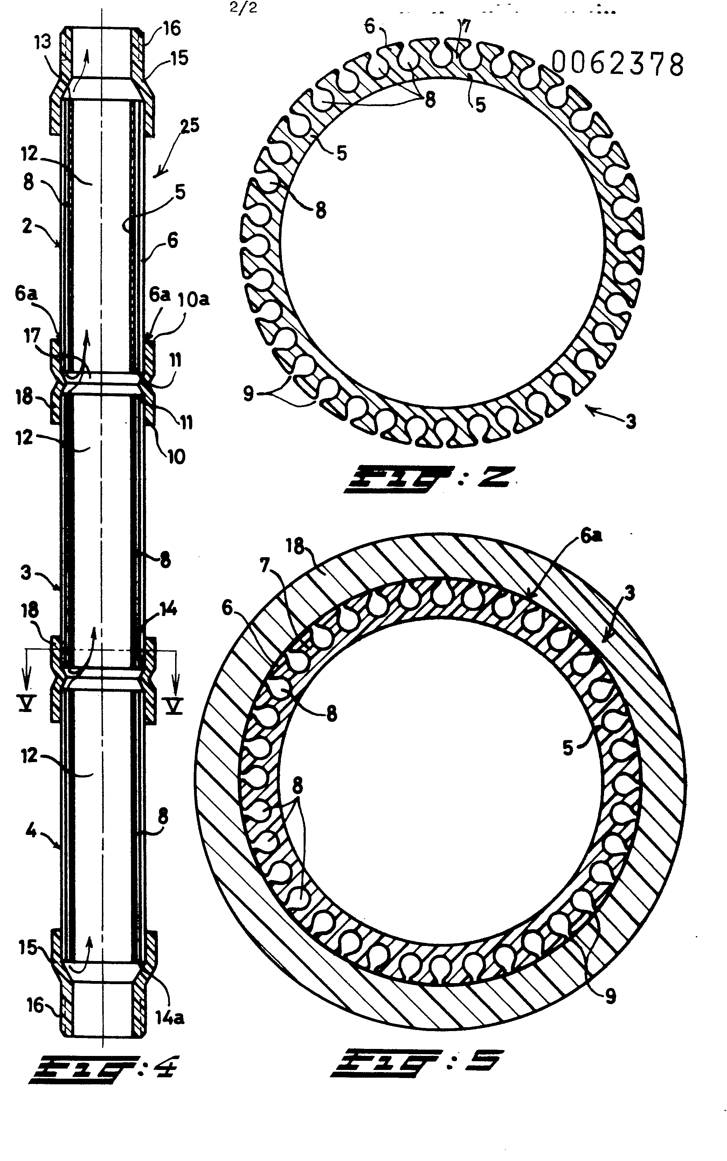

Fig. 3 shows in more detail the form of the slits 9 which ensure communication of the inner side of the channels 8 with the outer side of the plastics pipe.

As can be seen, the edges 19 and 20 of the slits 9 are rounded on either side, to wit both on the outer side 21a and on the inner side 21b as well as on the outer side 22a and on the inner side 22b.

As a result of the edges 19 and 20 of the slits 9 so being rounded, there are obtained optimum flow conditions for water or other soil liquids flowing into the longitudinal channels 8, since there are no flashes on the edges of the slits, whereas these often are present in the event of slits formed by mechanical treatment.

Moreover, in such a case, due to the rounding of the edges 19 and 20 there is hardly any danger of the inner side of the channels 3 becoming clogged up by soil particles, such as sand.

With particular advantage, the edges 19 and 20 of the slits 9 merge on the inner side, into straight channel surfaces 24 and 23 which jointly form an angle of 5 to 175$^\circ$, effectively of 45$^\circ$ to 135$^\circ$, and preferably of approximately 90$^\circ$. Said straight channel surfaces 24 and 23 join as tangential planes a rounded channel cross section forming an angle of 355° to 175°, effectively of 315° to 225°, and more preferably of 270°.

A suitable pipe has an outer diameter of 48 mm and a thickness of 4,4 mm; the slits may then have a width of 0,3; 0,5; 0,75, 1,0 and 1,5 mm respectively, thus obtaining a liquid-admission section per 100 mm of effective filter length expressed in $mm^2$ of 1200; 2000; 3000; 4000 and 6000, respecively.

For pipes having different diameters the following values for the water-admission section per 100 mm of effective filter length expressed in $mm^2$ are obtained.

| External pipe diameter in mm | Wall thickness in mm | Slit width expressed in mm | | | |
|---|---|---|---|---|---|
| | | 0,3 | 0,5 | 1,0 | 1,5 |
| 60 | 5,0 | 1,320 | 2,200 | 4,400 | 6,600 |
| 88 | 5,7 | 1,720 | 2,850 | 5,700 | 8,550 |
| 113 | 6,4 | 1,980 | 3,300 | 6,600 | 9,900 |
| 125 | 6,7 | 2,100 | 3,500 | 7,000 | 10,500 |
| 160 | 8,4 | 2,460 | 4,100 | 8,200 | 12,300 |
| 210 | 8,4 | 2,880 | 5,800 | 9,600 | 14,400 |

Fig. 4 shows a plastics well pipe 25 comprising a first plastics well pipe portion 2, a second plastics well pipe portion 3, and a third plastics well pipe portion 4 (all pipe portions consisting of pipes 1) which portions are connected by means of pipe enclosure parts 18 affixed by means of a glued joint 6a to the outer side of the pipe portions 2, 3 and 4 consisting of polyvinylchloride or a polyester resin.

Instead of a glued joint 6a, it is also possible to use (heat) shrunk sockets 18 which ensure a fixed connection between two successive plastics well pipe portions.

-6-

Each plastics well pipe portion 2, 3 and 4 consists of an inner wall 5, an outer wall 6 and connecting walls 7 extending between the inner wall 5 and the outer wall 6 and advantageously being integral with said inner wall and outer wall.

For the purpose of forming a connection between the channels 8, which are bounded by the inner wall 5, the outer wall 6 and two adjacent partition walls 7 , there are provided in the outer wall slits 9 which extend into the channels.

The slits 9 extend from the front end 14 to the other front end 11 of a plastics well pipe portion 2, 3 and 4, as a result of which for instance water flows, in an optimum manner, from the outer side into the channels and thence into the inner side 12 of the plastics well pipe 25.

When installing a glued joint 6a between the inner side of the socket part 5 and the outer side of the outer wall 6 of plastics well pipe portion 2, special care should be taken to prevent the channels from being completely sealed off by glue, since in such a case liquid will not be able to flow from the outer side into the inner side 12 of the plastics well pipe. For, if the slits 9 run all the way to the front ends 11 and 14 of a pipe portion 2, 3 or 4, this actually implies that naturally liquid flows via the slits 9 directly into the plastics well pipe 25.

On the ends 13 and 14a there are fitted coupling parts 15 provided with an external screwthread 16.

This thread affords such a plastics well pipe to be easily connected to a filter or riser pipe.

As can be seen, between the portions 2 and 3, the inner wall and the outer wall have been removed slitwise thus forming a slit 17. It will be evident that such a plastics well pipe according to the

-7-

invention can be manufactured in a considerably easier manner than is the case with a plastics well pipe, the inner wall of which has to be locally removed slitwise.

In an embodiment as shown in fig. 4 the slit 17 extends over the entire circumference of the plastics well pipe 25. It will, however, be obvious that it is also possible to so provide the slit 17 over a certain portion of the circumference of the plastics well pipe that the portions 2, 3 and 4 are still interconnected by small plastics well pipe portions. In such a case the socket part 18 is also necessary in order to obtain the desired rigidity of the plastics well pipe, It is obvious that a plastics well pipe according to the invention in which the slit 17 does not extend over the entire circumference can also be manufactured in an easier manner.

According to a very effective embodiment, the slits 9 longitudinally extend over the entire length of a plastics well pipe between two successive slits 17.

The longitudinally extending slits 9 can be formed by mechanical treatments like sawing through the outer wall of the longitudinally extending channels.

Providing such continuously extending longitudinal slits 9 presents the great advantage of an easy removal of any plastics particles getting into said channels, as well as of flashes, if any, present on the inner side of the channels.

The abovementioned pipes having conti-nuously extending slits lead to the following results when used as well pipes, in which case the consumption of material is also compared with a pipe having a solid wall. At the same time, for each well pipe, the liquid exit section is shown for all longitudinally extending channels. Using this value as a basis, it is always possible to calculate the length of the number of pipe portions of a given length, which are needed to form a well pipe of the desired capacity.

| External pipe diameter in mm | Wall thickness in mm | Internal pipe diameter in mm | Number of channels and longitudinal slits per circumference | Channel diameter in mm | Number of pipe portions per well pipe | Liquid exit section corresponding to internal pipe diameter | Material consumption corresponding to pipe having solid wall outer diameter | inner diameter |
|---|---|---|---|---|---|---|---|---|
| 48 | 4,4 | 39,2 | 40 | 2,6 | 3 | 41,3 | 40 | 2,65 |
| 60 | 5,0 | 50,0 | 44 | 3,0 | 3 | 50,0 | 60 | 3,0 |
| 88 | 5,7 | 76,6 | 57 | 3,5 | 4 | 76,8 | 88 | 3,4 |
| 113 | 6,4 | 100,2 | 66 | 3,9 | 5 | 102,8 | 113 | 3,8 |
| 125 | 6,7 | 111,4 | 70 | 4,1 | 5 | 111,3 | 125 | 4,1 |
| 160 | 7,4 | 145,2 | 82 | 4,5 | 6 | 145,0 | 160 | 4,45 |
| 210 | 8,4 | 193,2 | 96 | 5,1 | 7 | 195,0 | 210 | 5,1 |

-9-

Is is observed that the reference numerals in the claims are not intended  to restrict the scope thereof, but are only denoted for clarification.

CLAIMS

1.    A plastics pipe comprising longitudinally extending channels in its wall and slits which longitudinally extend in the outer wall of the channels, <u>characterized in that</u> the longitudinal slits (9) extend over the entire length of the channels (8).

2.    A plastics pipe according to claim 1, <u>characterized in that</u> the edges (19, 20) of the slits (9) are rounded.

3.    A plastics pipe according to claim 1 or 2, <u>characterized in that</u> the edges (19, 20) of the slits (9) are rounded both on the inner side and on the outer side.

4.    A plastics pipe according to claims 1-3, <u>characterized in that</u> the slits (9) merge on the inner side, into straight channel surfaces (23, 24) forming an angle of $5^\circ$ to $175^\circ$, preferably of $45^\circ$ to $135^\circ$.

5.    A plastics pipe according to claims 1-4, <u>characterized in that</u> the slits (9) merge on the inner side, into straight channel surfaces (23, 24) forming an angle of approximately $90^\circ$.

6.    A plastics pipe according to claims 1-5, <u>characterized in that</u> the slits (9) merge, on the inner side, into straight channel surfaces (23. 24) which join as tangential planes a substantially rounded channel cross section forming an angle of $355^\circ$ to $175^\circ$, and more preferably of $270^\circ$.

7.    A plastics pipe according to claims 1-6, <u>characterized in that</u> the plastics pipe is an extruded plastics pipe (1).

8.    A plastics pipe according to any one or several of the preceding claims, <u>characterized in that</u> the plastics pipe consists of a thermoplastics material, preferably polyvinylchloride.

9.    A method of extruding a plastics pipe, the wall of which

0062378

-2-

being provided with longitudinally extending channels and with slits which longitudinally extend in the outer wall of the channels, characterized  in that a plastics pipe (1) as claimed in claims 1 to 8 inclusive is extruded.

10.    A plastics well pipe comprising a plurality of interconnected plastics pipes according to claims 1 to 8 (fig. 4)

11.    A plastics well pipe according to claim 10, characterized in that  the pipes are interconnected by screw thread or a glued joint (16a) or by heat-shrinking (fig. 5).

FIG:1

FIG:3

0062378

FIG: 4

FIG: 2

FIG: 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | EP-A-0 002 294 (WAVIN) *Page 5, lines 8-21; figures 1-3* | 1,7,8 | E 03 B 3/18 E 21 B 43/08 |
| A | DE-A-2 316 751 (PREUSSAG) *Page 5, lines 5-12* | 1,2,3, 9 | |
| A | DE-B-1 140 153 (MANNESMANN) | | |
| A | NL-A-79 08714 (DHV) | | |

TECHNICAL FIELDS SEARCHED (Int. Cl. ³)

E 03 B
E 21 B
F 16 L

The present search report has been drawn up for all claims

| Place of search | Date of completion of the search | Examiner |
|---|---|---|
| THE HAGUE | 13-07-1982 | HANNAART J.P. |